# EUROPÄISCHE PATENTANMELDUNG

(11) **EP 2 169 011 A1**
(43) Veröffentlichungstag der Anmeldung: **31.03.2010**
(21) Anmeldenummer: 08165022.8
(22) Anmeldetag: 24.09.2008
(51) Int. Cl.: C09D 5/02, C09D 7/00, A47J 36/02, C09D 171/00, C09D 181/06

(54) **Verdicker für sinter- oder aufschmelzfähige Polymerdispersionen**

(71) Anmelder: Looser Holding AG, 9320 Anton (CH)
(72) Erfinder: Neppl, Bernhard, 50769, Köln (DE); Kadel, Dieter, 9422, Staad (DE)
(74) Vertreter: Dunkelberg, Oliver Thomas Michael

(57) **Zusammenfassung**

Verwendung eines anionischen Polysaccharids - ausgewählt aus der Gruppe der Alginate, Hyaluronsäure und ihren Salzen (Hyaluronaten), Pektine, Carrageenane, Xanthane, sulfatierten Dextrane und deren Mischungen - als Verdicker bei der Herstellung von Schichten aus mindestens einem, in wäßriger und tensidfreier Dispersion vorliegenden sinter- oder aufschmelzfähigen Polymer in einer Menge zwischen 0,01 bis 1,5 Gew.-%, bezogen auf die Dispersion.

## Beschreibung

Die vorliegende Erfindung betrifft die Verwendung eines speziellen Verdickers zur Herstellung einer Oberfläche mit verbessertem mehrfunktionalen Anforderungsprofil sowie die daraus resultierenden Beschichtungen.

Bei den heutigen Anforderung unterschiedlichste Artikel werden immer mehrere Eigenschaften gleichzeitig gestellt. Hinsichtlich dieses mehrfunktionalem Anforderungsprofil müssen die Oberflächen der Artikel insbesondere abriebbeständig gegenüber mechanischen Belastungen sein. Zum anderen müssen die Oberflächen auch chemisch inert sein, insbesondere wenn es sich um Oberflächen für den medizinischen oder alltäglichen Gebrauch (z.B. invasive Instrumente, Kochgeschirr, etc.) handelt. Des Weiteren werden oft antiadhäsive und/oder reibungsvermindernde Eigenschaften gefordert, insbesondere bei technischen Oberflächen (Bohrgestängen, Kolbenringen, Innenbeschichtungen von Bremszylindern) oder auch bei Alltagsgegenständen (z.B. Kochgeschirr).

In der Vergangenheit hat es viele Versuche gegeben, dieses mehrfunktionale Anforderungsprofil durch verschiedene Oberflächenmodifikationen oder -beschichtungen zu erfüllen.

Insbesondere auf dem Gebiet der Oberflächenbeschichtungen werden seit jüngerer Zeit immer mehr Polymere mit speziellen Eigenschaften verwendet, insbesondere Fluorpolymere oder sogenannte "Hochleistungspolymere". Diese Polymere haben die spezielle Eigenschaft, dass die aus ihnen herstellbaren Oberflächen nicht durch Kondensation oder Polymerisation erhalten werden, sondern durch Sintern oder Aufschmelzen.

Dabei hat sich gezeigt, dass die Verwendung eines einzigen Polymers alleine nicht geeignet ist, die geforderten Eigenschaften der resultierenden Oberflächen zu erfüllen.
Vielmehr werden immer mehr Mischungen unterschiedlichster Polymere eingesetzt, teilweise unter zusätzlicher Verwendung weiterer, nicht polymerhaltigen Substanzen (z.B. anorganische oder metallische Partikel), um die teilweise entgegengesetzten Eigenschaften zu erfordern.

Bei der Herstellung von Schichten aus in wäßriger Dispersion vorliegender sinter- oder aufschmelzfähiger Polymere besteht das Problem, dass an die resultierende Schicht ein spezielles Anforderungsprofil hinsichtlich der Korrosionsbeständigkeit und der Schichtdicke gestellt wird.

Eine zu geringe Schichtdicke führt dazu, dass die Schicht keine ausreichende Abriebsbeständigkeit aufweist.

Die Korrosionsbeständigkeit ist unter anderem von der physikalischen Struktur der resultierenden Polymerschicht abhängig. Denn wenn die Oberfläche beispielsweise Lücken oder Einbuchtungen aufweist, wird die darunter liegende Substratschicht frei geben und ist vor korrosiven Medien nicht mehr geschützt.

Aber auch im Falle von korrosionsbeständigen Substraten, wie z.B. von Edelstahl, führen Lücken oder Einbuchtungen in der polymeren Schicht zu Unterwanderungen der Polymerschicht durch die agressiven Medien, mit denen die Oberfläche in Kontakt steht, wie beispielsweise Bremsflüssigkeit bei beschichteten Bremskolben oder -zylindern oder heißem Fett im Fall beschichteter Bratpfannen.

In der Vergangenheit hat man versucht, die Schichtdicke unter anderem durch Verwendung von sogenannten Verdickern zu steuern. Bei der Herstellung von Schichten unter Verwendung von sinter- oder aufschmelzfähigen Polymeren entstehen aber - im Vergleich zu kondensierbaren und/oder polymerisierbaren Monomeren oder Polymeren - neue Problemen wie beispielsweise die Wasserbeständigkeit, Haftfestigkeit, Korrosionsbeständigkeit und Verlauf.

Auch können die üblichen in der Lackchemie bekannten Verdicker bei der Herstellung von Schichten unter Verwendung sinter- oder aufschmelzfähiger Polymere nur beschränkt Einsatz finden: Beispielsweise können nur anorganischen Schichtsilikate mit einer organisch modifizierten Oberfläche bei der Herstellung von Schichten unter Verwendung von sinter- oder aufschmelzfähigen Polymeren verwendet werden. Diese haben aber den Nachteil, dass die resultierende Schicht eine verschlechterte Korrosionsbeständigkeit und eine Flexibilitätsverlust (Versprödung), d.h. eine fehlende Zähelastizität bei einer mechanischen Einwirkung auf die Polymeroberfläche, aufweist.

Der Einsatz von organischen Verdickern, beispielsweise Polyacrylatverdickern, Gelatkomplexen, Polyvinylalkoholen, Celluloseestern oder Polysaccharidverdickern im Allgemeinen, führt bei der Herstellung von Schichten unter Verwendung von sinter- oder aufschmelzfähigen Polymeren, insbesondere solchen mit einem Sinter- oder Schmelzpunkt von mehr als 350 °C, zu stark verfärbten, teilweise infolge eines Verkohlungsprozesses zersetzten Oberflächenbeschichtungen, die eine deutlich verschlechterte Korrosionsbeständigkeit zeigen (auch eine leichte Verfärbung oder Vergilbung der resultierenden Oberfläche deutet bereits auf eine sich verschlechternde Korrosionsbeständigkeit), als solche Schichten ohne Verwendung dieses Verdickers. Aufgrund der geringen Schichtdicke der ohne Verdicker hergestellten Schichten aus sinter- oder aufschmelzfähigen Polymeren weisen diese aber eine zu geringe Abriebbeständigkeit auf.
Eine Erhöhung der Schichtdicke durch Erhöhung des Festkörperanteils der applikationsfertigen (spritzfähigen) Lackdispersion führt hingegen zu einer unzureichenden Oberflächenbeschaffenheit, die wiederum zu Oberflächendefekten und damit zu den zuvor genannten Problemen führt.

Solche Probleme treten insbesondere bei der Beschichtung von Oberflächen für den medizinischen oder alltäglichen Gebrauch mit antiadhäsiven und/oder reibungsvermindernden Eigenschaften auf Basis von sinter- oder aufschmelzfähigen Polymeren auf, insbesondere bei technischen Oberflächen (z.B. solchen von invasiven Instrumenten, Bohrgestängen, Kolbenringen, Innenbeschichtungen von Bremszylindern) oder auch bei Alltagsgegenständen (z.B. Kochgeschirr).

Aufgabe der vorliegenden Erfindung ist die Bereitstellung eines Verdickers, der bei der Beschichtung aus in wäßriger Dispersion vorliegenden sinter- oder aufschmelzfähige Polymere eingesetzt werden kann, wobei die resultierende gesinterte oder aufgeschmolzene Schicht keine verschlechterte Korrosionsbeständigkeit, keine Verfärbung und/oder Vergilbung sowie eine erhöhte Schichtdicke gegenüber solchen Schichten aufweist, die ohne den Verdicker erhalten werden.
Eine weitere Aufgabe der Erfindung ist die Bereitstellung eines Verdickers, mit der eine Festkörperkonzentration einer reinen Hochleistungspolymerdispersion der applikationsfertigen (spritzfähigen) Zusammensetzung von höchstens 30 % erzielt werden kann, um eine optimale Materialverarbeitung zu gewährleisten.

Die Aufgabe wird erfindungsgemäß gelöst durch die Verwendung eines anionischen Polysaccharids - ausgewählt aus der Gruppe der Alginate, Hyaluronsäure und ihren Salzen (Hyaluronaten), Pektine, Carrageenane, Xanthane, sulfatierten Dextrane und deren Mischungen - als Verdicker bei der Herstellung von Schichten aus mindestens einem, in wäßriger und tensidfreier Dispersion vorliegenden sinter- oder aufschmelzfähigen Polymer in einer Menge zwischen 0,01 bis 1,5 Gew.-%, bezogen auf die Dispersion.

Im Gegensatz zu den übrigen Polysacchariden zeigen die ausgewählten anionischen Polysaccharide nicht den Nachteil, dass sie zur Verfärbung neigen. Beispielsweise führt die Verwendung andere anionischer Polysaccharide als die beanspruchten, beispielsweise die Verwendung von Cellulose, Celluloseverbindungen (wie z.B. Carboxymethylcellulose), carboxymethyliertes Guar, Carboxymethylstärke, carboxymethyliertes Johannisbrotkernmehl und Dextrinen, zu einer starken Verkohlung der resultierenden Polymerschicht, die eine solch geringe Haftung aufweist, dass sie mit einem weichen Tuch abgewischt werden kann.

Die Menge an anionischem Polysaccharid beträgt 0,01 bis 1,5 Gew.%, wobei ein Bereich von 0,05 bis 0,5 Gew.% bevorzugt und ein Bereich von 0,05 bis 0,2 Gew.% besonders bevorzugt ist, jeweils bezogen auf das Gesamtgewicht der Dispersion. Es können jedoch bei sehr hoch konzentrierten oder sehr niedrig konzentrierten Formulierungen diese Bereiche überschritten werden.

Unter dem Begriff "tensidfreie Dispersion" werden hier und im folgenden solche Dispersionen verstanden, die kein Tensid und/oder Netzmittel und/oder Dispergiermittel aufweisen. Als Tenside und/oder Netzmittel und/oder Dispergiermittel werden solche Verbindungen bezeichnet, die die Oberflächenspannung einer Flüssigkeit oder die Grenzflächenspannung zwischen zwei Phasen herabsetzen und die Bildung von Dispersionen ermöglichen oder unterstützen. Beispiele für solche Verbindungen sind Alkylbenzolsulfonate, Alkyl- oder Alkenylethersulfonatsalze, gesättigte oder ungesättigte Fettsäuren, Alkyl- oder Alkylenethercarboxylsalze, Sulfofettsäuresalze oder Ester, Phosphatester, Polyoxyethylenalkyl- oder
- alkenylether, Polyoxyethylen-alkylvinylether, Polyoxypropylenalkyl- oder -alkenylether, Polyoxybutylenalkyl- oder alkenylether, höhere Fettsäurealkanolamide oder Alkylenoxidaddukte, Sucrose/Fettsäureester, Fettsäure/Glykolmonoester, Alkylaminoxide und Kondensationsprodukte von aromatischen Sulfonsäuren mit Formaldehyd (z.B. Kondensationsprodukte von Naphthalinsulfonsäuren mit Formaldehyd sowie Ditolylethersulfosäuren mit Formaldehyd) sowie Ligninsulfonaten oder Gemische aus den oben genannten Tensiden.

Bevorzugt werden anionische Polysaccharide verwendet, die bei einem pH-Wert von 7 im Wesentlichen löslich in Wasser sind. Vorzugsweise hat das anionische Polysaccharid ein Molekulargewicht, das über 20.000 liegt, besonders bevorzugt über 50.000.

Gemäß einer ganz besonders bevorzugten Ausführungsform ist das anionische Polysaccharid Xanthan.

Entsprechend einer ganz besonders bevorzugten Ausführungsform der vorliegenden Erfindung ist das sinter- oder aufschmelzfähige Polymer ein Hochleistungspolymer.

Unter dem Begriff "Hochleistungspolymer" werden hier und im folgenden solche Verbindungen verstanden, die eine Dauergebrauchstemperatur von mindestens 180 °C, insbesondere von mindestens 200 °C, ganz besonders bevorzugt von mindestens 240 °C, aufweisen.

Unter dem Begriff "Dauergebrauchstemperatur" wird hier und im folgenden die Temperatur verstanden, der eine polymere Oberfläche mindestens 48 Stunden lang ausgesetzt werden kann, ohne dass eine Zersetzung oder Versprödung der polymeren Oberfläche zu beobachten ist.

Als für die Erfindung geeignete Hochleistungspolymere eignen sich insbesondere Hochleistungsthermoplaste oder -duroplaste, ganz besonders bevorzugt Polysulfone (PSU), Polyphenylensulfide (PPS), Polyphenylethersulfone (PPSU), Polyethersulfone (PES), Polyaryletherketone (PAEK), Polyimide (PI), Polyarylimide (PAI), Polyetherketone (PEK).
Sofern die zuvor genannten Polymere aus mindestens zwei verschiedenen Monomerfragmenten bestehen, sind mit der obigen Definition alle Polymere umfaßt, die durch Variation der Abfolge und deren Verteilung der entsprechenden Fragmente innerhalb des Polymers möglich sind. Beispielsweise wird unter der Bezeichnung "Polyetherketone (PEK)" auch solche Polymere verstanden, die als "Polyetheretherketone (PEEK)" oder "Polyetherketoketone (PEKK)" bezeichnet werden.

Es ist aber auch möglich, als Hochleistungspolymere ganz oder teilweise fluorierte Polymere zu verwenden. Beispiele für geeignete Fluorpolymere sind Polytetrafluorethylen (PTFE), Perfluoroethylenpropylen-Copolymere (FEP), Polychlortrifluorethylen (PCTFE), Ethylenchlortrifluoroethlyen-Polymere (ECTFE), Polyvinylidenfluorid (PVDF) und Perfluoralkoxy-Polymere (PFA).

Gemäß einer bevorzugten Ausführungsform der vorliegenden Erfindung enthält die wäßrige Dispersion zusätzlich noch ein Colösemittel in einer Menge zwischen 0,5 bis 10 Gew.-%, bezogen auf die Dispersion, wobei das Colösemittel insbesondere ausgewählt ist aus der Gruppe von Diactonalkohol, Isopropanol, n-Propanol, der höhersiedenden Alkohole wie Dialkohole, Butylglykol und Furfirylaklkohol.
Die Verwendung des Colösemittels bewirkt nochmals eine verbesserte Ebenheit der Oberfläche.

Besonders bevorzugt werden die Schichten aus mindestens einem, in wäßriger Dispersion vorliegenden sinter- oder aufschmelzfähigen Polymer auf ein Substrat aufgebracht, das ganz oder teilweise aus einem korrosionsanfälligem Metall besteht, insbesondere aus Aluminium, Eisen oder deren Legierungen.
Dadurch können erfindungsgemäß besonders korrosionempfindliche Substrate wirksam gegen korrosive Umgebungsmedien geschützt werden.

Ebenso ist es aber möglich, dass bevorzugt die Schichten aus mindestens einem, in wäßriger Dispersion vorliegenden sinter- oder aufschmelzfähigen Polymer auf ein Substrat aufgebracht werden, das ganz oder teilweise aus einem korrosionsbeständigem Metall besteht, insbesondere aus Edelstahl.
Dadurch können erfindungsgemäß solche Substrate wirksam gegen Unterwanderung durch korrosive Umgebungsmedien geschützt werden.

Die unter erfindungsgemäßer Verwendung des anionischen Polysaccharids erhältlichen Schichten aus mindestens einem sinter- und/oder aufschmelzbaren Polymer eignen sich besonders bevorzugt bei der Herstellung von Gegenständen mit antiadhäsiven und/oder abriebsbeständigen Eigenschaften, insbesondere auf dem technisch-industriellen, medizinischen Gebiet oder als Alltagsgegenstand.
Vorteilhaften Einsatz finden solche Beschichtungen auch auf Werkzeugen, mit denen klebrige und pastöse Massen verarbeitet und bearbeitet werden. Die durch Sintern und/oder Aufschmelzen erzeugte Beschichtung kann z.B. auf Oberflächen von mechanisch und thermisch wenig belasteten Giessformen aufgebracht werden und ermöglicht ein leichteres Entformen. Mit der guten Antihaftwirkung der Oberfläche der Deckschicht verbunden ist eine niedrige Reibung, sodass die Beschichtung auch zur Herabsetzung der Reibungskräfte, also als Gleitschicht eingesetzt werden kann, was durch die verbesserte Härte der Beschichtung nun erstmals ermöglicht wird. Ein möglicher Einsatz der Beschichtung ergibt sich daher auch für mechanisch weniger stark belastete Lager oder allgemein an Grenzflächen, die gegeneinander reiben. Vorteilhaft ist der Einsatz der Beschichtung auch an solchen reibenden Grenzflächen, die chemisch aggressiven, heissen oder klebrigen Materialien und Flüssigkeiten ausgesetzt sind.

Die vorliegende Erfindung betrifft auch ein Verfahren zur Herstellung einer korrosions- und abriebsbeständigen Schicht aus mindestens einem, in wäßriger Dispersion vorliegenden sinter- oder aufschmelzfähigen Polymer, wobei
a) in die wäßrige Dispersion aus mindestens einem sinter- oder aufschmelzfähigen Polymer, ein anionisches Polysaccharid - ausgewählt aus der Gruppe der Alginate, Hyaluronsäure und ihren Salzen (Hyaluronaten), Pektine, Carrageenane, Xanthane, sulfatierten Dextrane und deren Mischungen - in einer Menge zwischen 0,01 bis 1,5 Gew.-%, bezogen auf die wässrige Dispersion hinzugegeben wird, vozugsweise in Form einer 2 %igen wäßrigen Lösung,
b) der pH-Wert der wärigen Dispersion gegebenenfalls auf einen Wert von mindestens 10 eingestellt wird,
c) die Mischung aus Schritt a) bzw. b) auf das zu beschichtende Substrat aufgebracht wird,
d) das in Schritt c) beschichtete Substrat zuerst bei einer Temperatur zwischen 120 und 150 °C getrocknet wird,
e) und nach dem Schritt d) das getrocknete Substrat einem Aufheizprozeß auf über 400 °C unterzogen wird.

In einer weiteren Ausführungsform betrifft die vorliegende Erfindung ein Verfahren zur Herstellung Verfahren zur Herstellung einer korrosions- und abriebsbeständigen Schicht, die PEK und/oder PEEK in wäßriger Dispersion enthält, wobei
a) in die wäßrige PEK/PEEK-Dispersion ein anionisches Polysaccharid - ausgewählt aus der Gruppe der Alginate, Hyaluronsäure und ihren Salzen (Hyaluronaten), Pektine, Carrageenane, Xanthane, sulfatierten Dextrane und deren Mischungen - in einer Menge zwischen 0,01 bis 1,5 Gew.-%, bezogen auf die wässrige Dispersion hinzugegeben wird, vozugsweise in Form einer 2 %igen wäßrigen Lösung,
b) der pH-Wert der wärigen Dispersion gegebenenfalls auf einen Wert von mindestens 10 eingestellt wird,
c) die Mischung aus Schritt a) bzw. b) auf das zu beschichtende Substrat aufgebracht wird,
d) das in Schritt c) beschichtete Substrat zuerst bei einer Temperatur zwischen 120 und 150 °C getrocknet wird,
e) und nach dem Schritt d) das getrocknete Substrat einem Aufheizprozeß auf über 400 °C unterzogen wird, der im Temperaturbereich zwischen 340 und 390 °C, insbesondere zwischen 350 und 380 °C, nicht unterbrochen oder abgekühlt, sondern kontinuierlich aufgeheizt wird.

Die Reihenfolge der einzelnen Schritte sowie das Temperaturprogramm in Schritt e) garantieren ein optimales Ergebnis im Hinblick auf die Haftung bei der Verwendung von PEK oder PEEK als in wäßriger Dispersion vorliegendes sinter- oder aufschmelzfähiges Polymer.

Zum Mischen der Dispersionen haben sich insbesondere hochscherende Rührsysteme bewährt, die - im Gegensatz zu den üblichen Schnellmischern, Hochleistungsdissolvern oder Perlmühlen - eine optimale Dispergierung ohne zu hohen Lufteintrag (Schaumbildung) bewirken.

Mit Hilfe dieser beiden Verfahren werden solche Schichten erhalten, die industriell im großen Maßstab anwendbar sind, ohne dass die Eigenschaften in bezug auf die Zähelastizität, Haftfestigkeit und Korrosionsbeständigkeit der resultierenden Beschichtung im Vergleich zu den im Labormaßstab hergestellen Schichten abweichen.

Die folgenden Beispiele dienen der Erläuterung der Erfindung, ohne die Erfindung hierauf zu beschränken oder sonst wie einzuschränken.

### Beispiel 1 (erfindungsgemäß):

Im 1,5 I Ansatzbehälter werden die Ausgangskomponenten gemäß der Tabelle I in der angegebenen Reihenfolge gemischt:
Zuerst wird das organische Colösemittel (Diacetonalkohol) mit der Ammoniak-Lsg. (32%) gemischt. Dann wird das Hochleistungspolymer mit der Hand (Rührholz) untergemischt und mittels eines geeigneten Hochleistungsdissolvers dispergiert.
Anschließend wird die angegebene Menge entionisiertes Wasser hinzugegeben, um die Mischung auf Verarbeitungsviskosität, d. h. auf Viskosität einstellen, wie das Material am besten zu verarbeiten ist. Zuletzt wird der Saccharidverdicker zugegeben. Die fertige Mischung wird dann noch mit dem Rührer etwa 2 Minuten lang homogenisiert.
Die erhaltene Dispersion hat einen Festkörpergehalt von ca. 27,0% und eine Viskosität von ca. 3,5 dPas (Brookfield-Rheometer).

### Vergleichsversuch (nicht erfindungsgemäß):

Das Beispiel 1 wird wiederholt, jedoch ohne Verwendung des Saccharid-Verdickers (Keltrol T). Dieses Vergleichsbeispiel dient als Standard bei der Beurteilung der übrigen Beispiele.

Die Vergleichsbeispiele A bis D werden analog zu Beispiel 1 hergestellt, jedoch wird ein anderer Verdicker verwendet.

### Herstellung der fertigen Beschichtung am Beispiel von Bratpfannen

Die in den Versuchen (Tabelle I) beschriebenen Lösungen wurden auf gestrahlte Stahl-Gusspfannen mittels eines Fliessbechers aufgebracht, in einem Ofen bei einer Temperatur von 50 °C und einer Dauer von 10 Min. getrocknet, dann anschließend in einem weiteren Ofen bei einer Temperatur von 24 °C und einer Dauer von 20 Min. gesintert.
Insgesamt wurden je 5 Pfannen beschichtet und untersucht. Die in der Tabelle I dargestellten Werte sind die resultierenden Mittelwerte.

Die so hergestellten Pfannen werden den nachstehend beschriebenen Untersuchungen unterzogen:

### Beurteilung des Verlaufs

Bei den Pfannen wurde der Verlauf der Pfannen rein visuell beurteilt. Darauf geachtet wurde, ob Stippen zu beobachten sind, d.h. Polymerpartikel, die aus der Lackoberfläche herausstehen. Darüber hinaus wurde beurteilt, ob ein sogenannter "Quecksilbereffekt" zu beobachten war. Unter einem "Quecksilbereffekt" wird verstanden, dass der resultierende Polymerfilm bei der Sintertemperatur 340 °C ein nasses Aussehen, d.h. einen optischen Flüssigkeitseffekt aufweist, obwohl die tatsächliche Beschichtung komplett ausgehärtet und gesintert ist.

### Beurteilung der Haftung

Die Untersuchung auf Haftung erfolgt nach der DIN 53 151 bzw. DIN ISO 2409 (Gitterschnitt).

Die Gitterschnittprüfung erfolgt indem die Beschichtung in einem definierten Schnittabstand mit einem scharfen Messer gleichmäßig bis auf den Untergrund eingeritzt wird. Es werden sechs sich rechtwinklig kreuzende Schnitte ausgeführt. Je nach Abplatzungen der Beschichtung wird der Gitterschnittkennwert von Gt 0 bis Gt 4 angegeben, wobei Gt 0 eine sehr gute, Gt 4 eine sehr schlechte Haftfestigkeit ausdrückt.

### Untersuchung des subjektiven Empfindens der Filmeigenschaft

Mit einem Metallgegenstand mit einer scharfen Kante (sog. "Groschentest") wird die Fertigoberfläche bis zum Untergrund verletzt. Aufgrund des Gefühls beim Verletzen des Untergrunds und der daraus resultierenden Kratzgeräusche wird die Zähelastizität subjektiv beurteilt.

Die Tabelle I zeigt deutlich, dass nur der erfindungsgemäße Artikel gegenüber den Artikeln des Standes der Technik deutlich verbesserte Eigenschaften aufweist: Gegenüber dem Vergleichsbeispiel ist die Haftung verbessert, die Verwendung eines handelsüblichen Acrylatverdickers ist bei der farblichen Beurteilung nicht akzeptabel, die Verwendung eines Schichtsilikats verschlechtert die Zähelastizität und die Verwendung von Polyvinylalkohol oder Celluloseester als Verdicker führt zu völlig unbrauchbaren Ergebnissen.

**Tabelle I**

| | Vergleichsversuch | Beispiel 1 | Vergleichsbeispiel A | Vergleichsbeispiel B | Vergleichsbeispiel C | Vergleichsbeispiel D |
|---|---|---|---|---|---|---|
| Diacetonalkohol | 10 | 10 | 10 | 10 | 10 | 10 |
| Ammoniak LSG | 10 | 10 | 10 | 10 | 10 | 10 |
| | | | | | | |
| VE-Wasser | 100 | 100 | 100 | 100 | 100 | 100 |
| Vitrex 708 PEK | 270 | 270 | 270 | 270 | 270 | 270 |
| VE-Wasser | 400 | 400 | 400 | 400 | 400 | 400 |
| | | | | | | |
| VE-Wasser | 207,8 | 207,8 | 207,8 | 207,8 | 207,8 | 207,8 |
| | | | | | | |
| Sacharid-Verdicker (Keltrol T) | 0 | 2,2 | 0 | 0 | 0 | 0 |
| Acrylat-Verdicker (Viscolam | | | | | | |
| 330) | 0 | 0 | 5 | 0 | 0 | 0 |
| org.-modifiziertes | | | | | | |
| Schichtsilikat (Laponite RD) | | | 0 | 2 | 0 | 0 |
| Polyvinylalkohol | 0 | 0 | 0 | 0 | 2 | 0 |
| Celluloseester | 0 | 0 | 0 | 0 | 0 | 5 |
| Gesamtmenge | 997,8 | 1000 | 1002,8 | 999,8 | 999,8 | 1002,8 |
| Farbe nach 420° gegen Original ohne Zusatz | hellgelber Stich | Leicht gelb- brauner Stich | Braun-schwarz | Leichter brauner Stich | schwarz | schwarz |
| Zähelastizität (Kratztest) | --- | Vergleichbar wie Original | Etwas schlechter Original wie | Spröde e | Schlechter wie Original | Schlechter wie Original |
| Rheologie | Keine Verdickende Wirkung | Verdickende Wirkung, leichte Thixotropie | Verdickende Wirkung | Thixotropierende Wirkung, nur zusammen mit zusätzlichem Verdicker zu verwenden (keine Festkörperreduzierung. | Keine Prüfung möglich | Keine Prüfung möglich |
| Haftung (Gitterschnitt) Ausreißer Alle Mengenangaben in g (Einwaage) | GT 0-1 | GT 0 | GT 0 | GT 1 | Keine Prüfung möglich | Keine Prüfung möglich |

## Patentansprüche

1. Verwendung eines anionischen Polysaccharids - ausgewählt aus der Gruppe der Alginate, Hyaluronsäure und ihren Salzen (Hyaluronaten), Pektine, Carrageenane, Xanthane, sulfatierten Dextrane und deren Mischungen - als Verdicker bei der Herstellung von Schichten aus mindestens einem, in wäßriger und tensidfreier Dispersion vorliegenden sinter- oder aufschmelzfähigen Polymer in einer Menge zwischen 0,01 bis 1,5 Gew.-%, bezogen auf die Dispersion.

2. Verwendung nach Anspruch 1, **dadurch gekenzeichnet, dass** das anionische Polysaccharid Xanthan ist.

3. Verwendung nach Anspruch 1 oder 2, **dadurch gekenzeichnet, dass** das sinter- oder aufschmelzfähige Polymer ein Hochleistungspolymer, insbesondere ein Hochleistungsthermoplast oder -duroplast, ganz besonders bevorzugt PI, PAI, PEK, PEEK, PES oder PPS, ist.

4. Verwendung einem der vorherigen Ansprüche, **dadurch gekenzeichnet, dass** die wäßrige Dispersion zusätzlich noch einen Colösemittel in einer Menge zwischen 0,5 bis 10 Gew.-%, bezogen auf die Dispersion, enthält, insbesondere ausgewählt aus der Gruppe von Diactonalkohol, Isopropanol, n-Propanol, der höhersiedenden Alkohole wie Dialkohole, Butylglykol und Furfirylaklkohol.

5. Verwendung einem der vorherigen Ansprüche, **dadurch gekenzeichnet, dass** Schichten aus mindestens einem, in wäßriger Dispersion vorliegenden sinter- oder aufschmelzfähigen Polymer auf ein Substrat aufgebracht wird, das ganz oder teilweise aus einem korrosionsanfälligen Metall besteht, insbesondere aus Aluminium, Eisen oder deren Legierungen.

6. Verwendung einem der Ansprüche 1 bis 4, **dadurch gekenzeichnet, dass** Schichten aus mindestens einem, in wäßriger Dispersion vorliegenden sinter- oder aufschmelzfähigen Polymer auf ein Substrat aufgebracht wird, das ganz oder teilweise aus einem korrosionsbeständigen Metall besteht, insbesondere aus Edelstahl.

7. Verwendung einem der vorherigen Ansprüche bei der Herstellung von einem Gegenstand mit antiadhäsiven und/oder abriebsbeständigen Eigenschaften, insbesondere auf dem technisch-industriellen, medizinischen Gebiet oder als Alltagsgegenstand.

8. Verfahren zur Herstellung einer korrosions- und abriebsbeständigen Schicht aus mindestens einem, in wäßriger Dispersion vorliegenden sinter- oder aufschmelzfähigen Polymer, wobei
a) in die wäßrige Dispersion aus mindestens einem sinter- oder aufschmelzfähigen Polymer ein anionisches Polysaccharid - ausgewählt aus der Gruppe der Alginate, Hyaluronsäure und ihren Salzen (Hyaluronaten), Pektine, Carrageenane, Xanthane, sulfatierten Dextrane und deren Mischungen - in einer Menge zwischen 0,01 bis 1,5 Gew.-%, bezogen auf die wässrige Dispersion hinzugegeben wird, vozugsweise in Form einer 2 %igen wäßrigen Lösung,
b) der pH-Wert der wärigen Dispersion gegebenenfalls auf einen Wert von mindestens 10 eingestellt wird,
c) die Mischung aus Schritt a) bzw. b) auf das zu beschichtende Substrat aufgebracht wird,
d) das in Schritt c) beschichtete Substrat zuerst bei einer Temperatur zwischen 120 und 150 °C getrocknet wird,
e) und nach dem Schritt d) das getrocknete Substrat einem Aufheizprozeß auf über 400 °C unterzogen wird.

9. Verfahren zur Herstellung einer korrosions- und abriebsbeständigen Schicht, die PEK und/oder PEEK in wäßriger Dispersion enthält, wobei
a) in die wäßrige PEK/PEEK-Dispersion ein anionisches Polysaccharid - ausgewählt aus der Gruppe der Alginate, Hyaluronsäure und ihren Salzen (Hyaluronaten), Pektine, Carrageenane, Xanthane, sulfatierten Dextrane und deren Mischungen - in einer Menge zwischen 0,01 bis 1,5 Gew.-%, bezogen auf die wässrige Dispersion hinzugegeben wird, vozugsweise in Form einer 2 %igen wäßrigen Lösung,
b) der pH-Wert der wärigen Dispersion gegebenenfalls auf einen Wert von mindestens 10 eingestellt wird,
c) die Mischung aus Schritt a) bzw. b) auf das zu beschichtende Substrat aufgebracht wird,
d) das in Schritt c) beschichtete Substrat zuerst bei einer Temperatur zwischen 120 und 150 °C getrocknet wird,
e) und nach dem Schritt d) das getrocknete Substrat einem Aufheizprozeß auf über 400 °C unterzogen wird, der im Temperaturbereich zwischen 340 und 390 °C, insbesondere zwischen 350 und 380 °C, nicht unterbrochen oder abgekühlt, sondern kontinuierlich aufgeheizt wird.
